# EUROPÄISCHE PATENTANMELDUNG

(11) **EP 2 481 951 A1**
(43) Veröffentlichungstag der Anmeldung: **01.08.2012**
(21) Anmeldenummer: 11195738.7
(22) Anmeldetag: 27.12.2011
(51) Int. Cl.: F16H 37/08, F16H 15/12

(54) **Reibradgetriebe**

(30) Priorität: 27.01.2011 AT 1072011
(71) Anmelder: AVL List GmbH, 8020 Graz (AT)
(72) Erfinder: Rieger, Johannes, 8102 SEMRIACH (AT)
(74) Vertreter: Babeluk, Michael

(57) **Zusammenfassung**

Die Erfindung betrifft ein Reibradgetriebe zur stufenlosen Drehzahlregelung der Drehzahl einer Ausgangswelle (9), welche durch eine treibende Eingangswelle (12) angetrieben ist, wobei zwischen der Ein- und Ausgangswelle (12, 9) ein Planetengetriebe oder Ausgleichsgetriebe (1) angeordnet ist, wobei eine erste Komponente des Planeten- oder Ausgleichsgetriebe (1) mit einem ersten Reibrad (2) und die zweite Komponente des Planeten- oder Ausgleichsgetriebe (1) mit einem zum ersten Reibrad (2) drehachsgleichen zweiten Reibrad (3) verbunden ist, wobei das zweite Reibrad (3) mit der Ausgangswelle (9) antriebsverbunden ist und wobei die Einganswelle (12) mit einer dritten Komponente des Planeten- oder Ausgleichsgetriebe (1) antriebsverbunden ist, mit einer um eine Reibscheibenachse (5a) drehbaren Reibscheibe (5), wobei die Reibscheibenachse (5a) normal zu den Drehachsen (2a, 3a) der Reibräder (2, 3) angeordnet ist und die Reibscheibe (5) parallel zur Drehachse (2a, 3a) der Reibräder (2, 3) verschiebbar ist, und wobei die Reibräder (2, 3) auf der Reibscheibe (5) abrollen können. Um auf möglichst einfache Weise eine Unterbrechung des Kraftflusses zur Ausgangswelle zu ermöglichen, ist vorgesehen, dass die Reibscheibe (5) im Bereich der Reibscheibenachse (5a) eine konzentrisch zur Reibscheibenachse (5a) angeordnete Ausnehmung oder Vertiefung (10) aufweist.

## Beschreibung

Die Erfindung betrifft ein Reibradgetriebe zur stufenlosen Drehzahlregelung der Drehzahl einer Ausgangswelle, welche durch eine treibende Eingangswelle angetrieben ist, wobei zwischen der Ein- und Ausgangswelle ein Planetengetriebe oder Ausgleichsgetriebe angeordnet ist, wobei eine erste Komponente des Planeten- oder Ausgleichsgetriebe mit einem ersten Reibrad und die zweite Komponente des Planeten- oder Ausgleichsgetriebe mit einem zum ersten Reibrad drehachsgleichen zweiten Reibrad verbunden ist, wobei das zweite Reibrad mit der Ausgangswelle antriebsverbunden ist und wobei die Einganswelle mit einer dritten Komponente des Planeten- oder Ausgleichsgetriebe antriebsverbunden ist, mit einer um eine Reibscheibenachse drehbaren Reibscheibe, wobei die Reibscheibenachse normal zu den Drehachsen der Reibräder angeordnet ist und mit dieser eine Ebene aufspannen, wobei die Reibscheibe parallel zur Drehachse der Reibräder in der Ebene verschiebbar gelagert ist, und wobei die Reibräder denselben Durchmesser aufweisen und auf der Reibscheibe abrollen können.

Aus der EP 0 009 343 A1 ist eine Reibradgetriebe mit einem Ausgleichs- bzw. Planetengetriebe bekannt, welches zwei Reibräder mit gleichen Durchmessern aufweist, welche auf einer Reibscheibe abrollen. Die um eine Reibscheibenachse normal zur Drehachse der Reibräder drehbare Reibscheibe ist parallel zur Drehachse der Reibräder längsverschieblich angeordnet. Durch Verschieben der Reibscheibe verändert sich der Abrollradius der Reibräder auf der Reibscheibe und somit das Drehzahlverhältnis zwischen dem ersten Reibrad und dem zweiten Reibrad. Auf diese Weise lässt sich eine stufenlose Übersetzung zwischen einer Eingangswelle und einer Ausgangswelle realisieren. Die Reibscheiben weisen dabei jeweils eine ringförmige Abrollfläche für die Reibräder auf und sind um einen nicht drehbaren Wellenzapfen drehbar gelagert. Der mittlere Bereich der Reibscheiben ist somit jeweils nicht drehbar. Dies bewirkt, dass das mittige Reibrad abrupt blockiert, sobald dieses Reibrad - beispielsweise bei Änderung der Fahrtrichtung - mit dem stillstehenden Wellenzapfen in Kontakt kommt. Somit ist zumindest bei Änderung der Fahrtrichtung eine zusätzliche Kupplung zum Unterbrechen des Kraftflusses zwischen der Reibscheibe und der Ausgangswelle erforderlich.

Aufgabe der Erfindung ist es, diesen Nachteil zu vermeiden und bei einem Reibradgetriebe der eingangs genannten Art auf möglichst einfache Weise eine Kraftflussunterbrechung bei Wechsel der Drehrichtung der Ausgangswelle zu ermöglichen.

Erfindungsgemäß wird dies dadurch erreicht, dass die Reibscheibe im Bereich der Reibscheibenachse eine konzentrisch zur Reibscheibenachse angeordnete Ausnehmung oder Vertiefung aufweist.

Vorzugsweise ist dabei vorgesehen, dass der Durchmesser der kreisförmigen Ausnehmung oder Vertiefung mindestens der Wälzbreite zumindest eines Reibrades entspricht, welches in zumindest einer Betriebsstellung des Reibradgetriebes von der Reibscheibenachse geschnitten wird.

Eine möglichst verschleißarme Veränderung der Drehzahl lässt sich erreichen, wenn zumindest ein Reibrad - in einem Meridianschnitt betrachtet - einen gekrümmten konvexen Abrollbereich mit einem definierten Krümmungsradius aufweist. Zur Kraftflussunterbrechung kann dabei vorgesehen sein, dass die Ausnehmung oder Vertiefung eine gekrümmte konkave Oberfläche aufweist, wobei vorzugsweise der Krümmungsradius der Oberfläche im Wesentlichen dem Krümmungsradius des Reibrades entspricht.

Der Durchmesser der Ausnehmung oder Vertiefung wird dabei möglichst klein gehalten, um ein stoßfreies Anfahren der Ausgangswelle aus dem Ruhezustand zu ermöglichen. Der Radius im Bereich des Bodens der Ausnehmung oder Vertiefung und im Bereich des Übergangs zur ebenen Abrollfläche der Reibscheibe ermöglichen ein sanftes Beschleunigen aus dem Stillstand.

Um eine sichere Kraftschlussunterbrechung zu ermöglichen, ist vorgesehen, dass die Ausnehmung oder Vertiefung eine definierte maximale Tiefe aufweist, welche mindestens der Eindrücktiefe des vorzugsweise elastisch ausgeführten Reibrades entspricht.

Die Abrollfläche der Reibscheibe ist dabei im Wesentlichen eben und geschlossen ausgeführt, um eine gleichmäßige Änderung des Drehzahlverhältnisses zwischen Eingangs- und Ausgangswellen zu ermöglichen.

Abhängig von der Höhe des maximal zu übertragenden Drehmomentes können mindestens zwei, vorzugsweise mindestens drei um jeweils eine Reibscheibenachse drehbare Reibscheiben vorgesehen sein, deren normal zur Drehachse der Reibräder angeordnete Reibscheibenachsen einen gemeinsamen Schnittpunkt auf der Drehachse der Reibräder aufweisen.

Eine einfache Veränderung des Drehzahlverhältnisses lässt sich erzielen, wenn die Reibscheibe auf einem parallel zur Drehachse der Reibräder verschiebbar gelagerten Scheibenträger drehbar gelagert ist.

Die Erfindung wird im Folgenden anhand der Figuren näher erläutert. Es zeigen:
- Fig. 1: ein erfindungsgemäßes Reibradgetriebe in einer ersten Betriebsstellung;
- Fig. 2: das Reibradgetriebe in einer zweiten Betriebsstellung;
- Fig. 3: das Reibradgetriebe in einer dritten Betriebsstellung;
- Fig. 4: das Reibradgetriebe in einer vierten Betriebstellung;
- Fig. 5: das Reibradgetriebe in einer fünften Betriebsstellung; und
- Fig. 6: ein erfindungsgemäßes Reibradgetriebe in einer Stirnansicht in einer Ausführungsvariante.

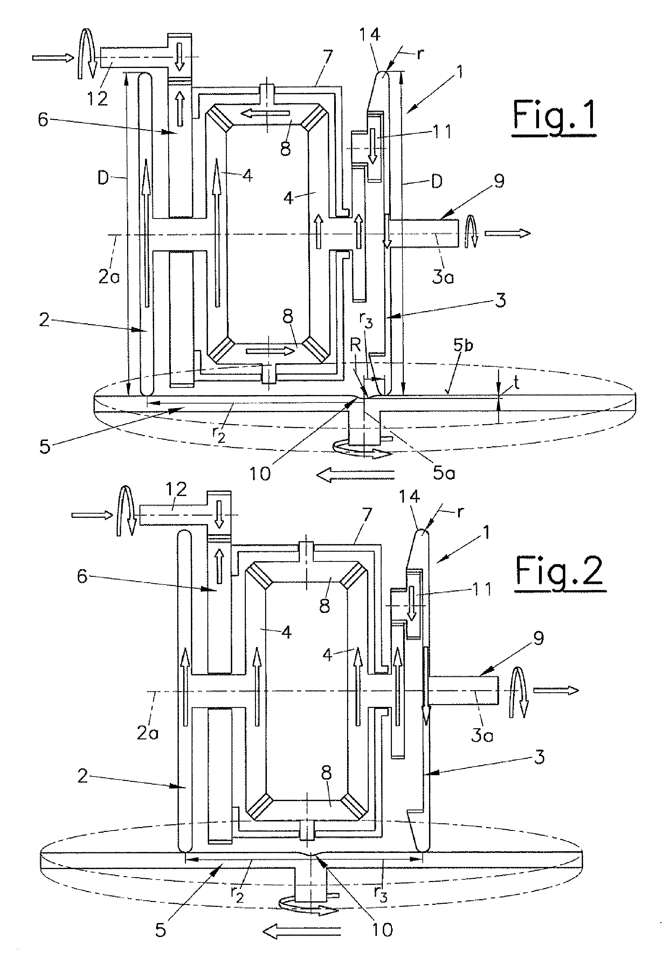

Das in den Fig. 1 bis Fig. 5 dargestellte mechanisch stufenlos verstellbare Reibradgetriebe weist ein Ausgleichsgetriebe 1 und zwei Reibräder 2, 3 auf, die jeweils mit einem Reibrad verbunden sind. Die Reibräder 2, 3, deren Drehachsen 2a, 3a achsgleich ausgebildet sind und die denselben Durchmesser D aufweisen, sind über die verstellbare Reibscheibe 5 mittels Kraftschluss verbunden.

Die Drehmomenteinleitung erfolgt über die Eingangswelle 12 am Tellerrad 6 des Ausgleichsgetriebes 1, welches mit dem Ausgleichsgehäuse 7 verbunden ist, und wird über die Ausgleichsräder 8 auf die Wellenräder 4 verteilt. Die Verteilung des Drehmomentes auf die Wellenräder 4 wird über die Stellung der Reibscheibe 5 und den sich dadurch ergebenden Reibpunkt-Radius r₂, r₃ der Reibräder 2, 3 an der Reibscheibe 5 gesteuert. Durch eine Ausnehmung oder Vertiefung 10 im Bereich der Reibscheibenachse 5a der mit einer im Wesentlichen ebenen Abrollfläche 5b ausgebildeten Reibscheibe 5 kann der Kraftschluss für eine Leerlaufstellung unterbrochen werden. Das Zahnrad 11 dient zur Drehrichtungsumkehr.

In Fig. 1 ist das Reibradgetriebe in einer ersten Betriebsstellung dargestellt, bei der eine Übersetzung ins Langsame erfolgt. Die Reibscheibe 5 ist dabei soweit nach links verschoben, bis sich das Reibrad 3 außerhalb der Ausnehmung oder Vertiefung 10 der Reibscheibe 5 befindet. Dadurch kommt es auch zu einem Kraftschluss zwischen Reibrad 3 und Reibscheibe 5. Die Eingangsdrehzahl des Tellerrades 6 wird über das Ausgleichsgetriebe 1 auf die Reibräder 2, 3 im Verhältnis des aktuellen Reibpunkt-Radius r₁ zu r₂ an der Reibscheibe 5 auf die Wellenräder 4 verteilt. Das Reibrad 3 und damit die Ausgangswelle 9 drehen sich langsamer als die Eingangswelle 12.

Fig. 2 zeigt eine zweite Betriebsstellung des Reibradgetriebes, in welchem das Übersetzungsverhältnis zwischen der Drehzahl der Eingangswelle 12 zur Drehzahl der Ausgangswelle 9 etwa 1:1 entspricht. Die Reibscheibe 5 ist dabei weiter nach links verschoben, bis die Reibpunkt-Durchmesser r₂, r₃ der beiden Reibräder 2, 3 mit der Reibscheibe 5 den gleichen Abstand zur Reibscheibenachse 5a aufweisen. Die Eingangsdrehzahl des Tellerrades 6 wird über das Ausgleichsgetriebe 1 auf die Reibräder 2, 3 im Verhältnis der aktuellen Reibpunkt-Radien r₂, r₃ an der Reibscheibe 5 verteilt. Das Reibrad 3 und damit die Ausgangswelle 9 drehen sich im Verhältnis 1:1 zur Eingangsdrehzahl des Tellerrades 6.

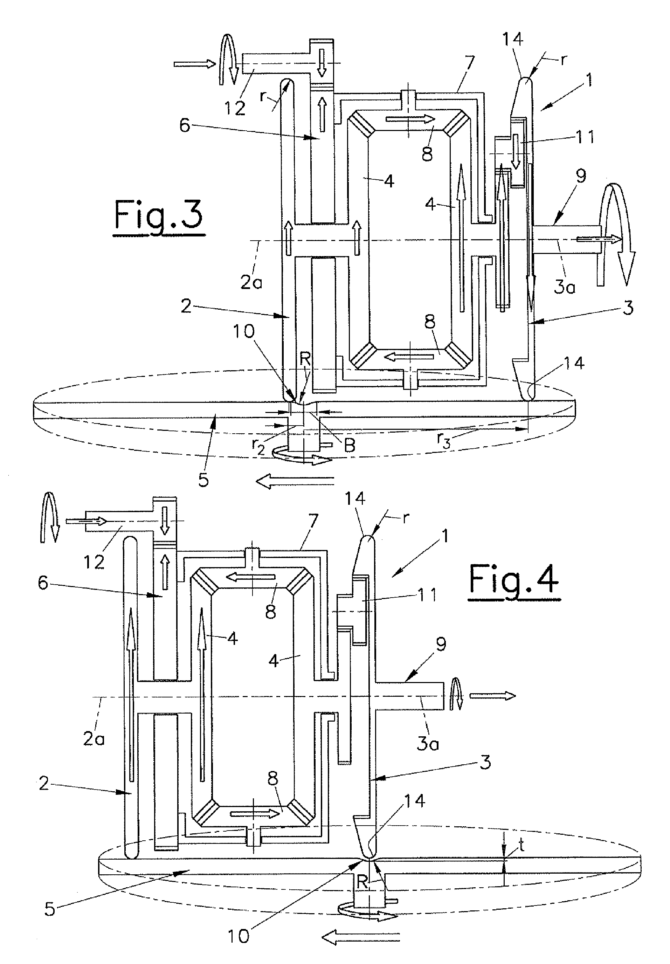

Fig. 3 zeigt das Reibradgetriebe in einer dritten Betriebsstellung, in welcher eine Übersetzung ins Schnelle erfolgt. Die Reibscheibe 5 ist dabei noch weiter nach links verschoben. Die Eingangsdrehzahl des Tellerrades 6 wird über das Ausgleichsgetriebe 1 auf die Reibräder 2, 3 im Verhältnis der aktuellen Reibpunkt-Radien r₂, r₃ an der Reibscheibe 5 verteilt. Das Reibrad 3 und damit die Ausgangswelle 9 drehen sich schneller als die Drehzahl der Eingangswelle 12.

Fig. 4 zeigt das Reibradgetriebe in einer dem Leerlauf entsprechenden vierten Betriebsstellung. Im Leerlauf wird die Reibscheibe 5 so gestellt, dass das Reibrad 3 von der Reibscheibenachse 5a geschnitten wird und durch die Ausnehmung oder Vertiefung 10 in der Reibscheibenmitte keine Kraftschlussverbindung mit der Reibscheibe 5 besteht. Dadurch wird die gesamte Eingangsdrehzahl des Tellerrades 6 in das Reibrad 2 und weiter auf die Reibscheibe 5 geleitet. Das Reibrad 3 und damit die Ausgangswelle 9 stehen still.

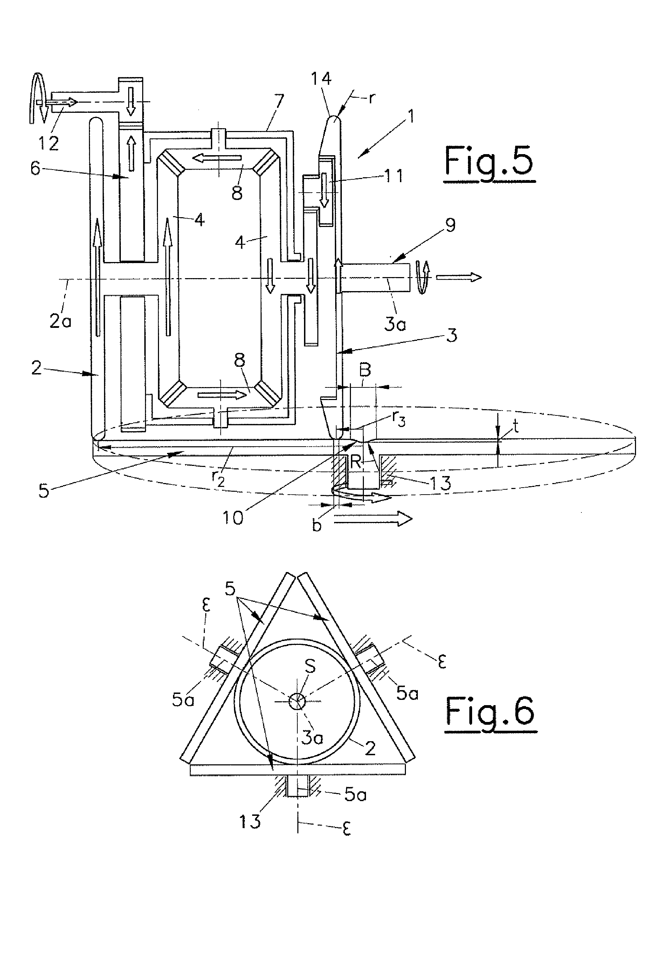

Fig. 5 zeigt das Reibradgetriebe in einer fünften Betriebsstellung, welche dem Retourgang entspricht. Die Reibscheibe 5 ist dabei soweit nach rechts verschoben, bis sich das Reibrad 3 außerhalb der Ausnehmung oder Vertiefung 10 der Reibscheibe 5 befindet. Dadurch kommt es auch zu einem Kraftschluss zwischen Reibrad 3 und Reibscheibe 5. Die Eingangsdrehzahl des Tellerrades 6 wird über das Ausgleichsgetriebe 1 auf die Reibräder 2, 3 im Verhältnis der aktuellen Reibpunkt-Radien r₁, r₂ auf der Reibscheibe 5 verteilt. Das Reibrad 3 und damit die Ausgangswelle 9 drehen sich langsam und entgegengesetzt zur Eingangsdrehzahl und Eingansrichtung.

Die Tiefe t der Vertiefung 10 entspricht mindestens der Eindrucktiefe der aus elastischem Material gebildeten Reibräder 2, 3. Die Breite der Ausnehmung oder Vertiefung 10 sollte mindestens der Abrollbreite b der Reibräder 2, 3 entsprechen. Um eine möglichst punktförmige Kontaktfläche mit wenigen Reibungsverlusten zwischen den Reibrädern 2, 3 und der Reibscheibe 5 zu erreichen, ist jedes Reibrad 2, 3 im Abrollbereich 14 - in einem Meridianschnitt betrachtet - konkav gekrümmt ausgeführt und weist einen definierten Krümmungsradius r im Abrollbereich 14 auf. Im Ausführungsbeispiel ist die Oberfläche der Ausnehmung oder Vertiefung 10 mit einem entsprechenden konkaven Krümmungsradius 3 ausgeführt, welcher mindestens dem Krümmungsradius r der Reibräder 2, 3 im Abrollbereich 14 entspricht. Dadurch wird einerseits eine vollständige Unterbrechung des Kraftflusses zwischen Eingangswelle 12 und Ausgangswelle 9 erreicht und andererseits ein sanfter Anfahrvorgang ermöglicht.

Um ein stoßfreies und langsames Anfahren der Ausgangswelle 9 aus dem Leerlauf zu ermöglichen, sollte die Breite B der Ausnehmung oder Vertiefung 10 möglichst klein gehalten werden.

Um hohe Drehmomente zwischen der Eingangswelle 12 und der Ausgangswelle 9 übertragen zu können, können auch mehrere Reibscheiben 5 vorgesehen sein. Fig. 6 zeigt eine Ausführungsvariante eines Reibradgetriebes mit drei Reibscheiben 5, deren Reibscheibenachsen 5a normal zu den Drehachsen 2a, 3a der Reibräder 2, 3 angeordnet ist, wobei die Reibscheibenachsen 5a mit den Drehachsen 2a bzw. 3a der Reibräder 2, 3 jeweils eine Ebene ε aufspannen. Die Reibscheibenachsen 5a schneiden sich dabei in einen gemeinsamen Punkt S im Bereich der Drehachsen 2a bzw. 3a. Alle Reibscheiben 5 sind dabei drehbar in einem gemeinsamen Reibscheibenträger 13 gelagert, welcher parallel zu den Drehachsen 2a bzw. 3a des Reibradgetriebes verschiebbar ist.

Das beschriebene Reibradgetriebe ermöglicht auf einfache Weise eine stufenlose Geschwindigkeitsverstellung, wobei hohe Getriebespreizungen realisierbar sind. Durch die Ausnehmung oder Vertiefung 10 im Bereich der Reibscheibenmitte lässt sich eine Leerlaufstellung ermöglichen, wobei eine während des Betriebes schaltbare Drehrichtungsumkehr der Ausgangswelle 9 sowie eine Entkoppelung der Ausgangswelle von der Reibscheibe 5 ohne Einsatz einer separaten Kupplung verwirklicht werden kann. Für die Änderung des Drehzahlverhältnisses zwischen der Eingangswelle 12 und Ausgangswelle 9, sowie zur Drehrichtungsumkehr ist lediglich ein einziges Verstellelement erforderliche.

## Patentansprüche

1. Reibradgetriebe zur stufenlosen Drehzahlregelung der Drehzahl einer Ausgangswelle (9), welche durch eine treibende Eingangswelle (12) angetrieben ist, wobei zwischen der Ein- und Ausgangswelle (12, 9) ein Planetengetriebe oder Ausgleichsgetriebe (1) angeordnet ist, wobei eine erste Komponente des Planeten- oder Ausgleichsgetriebe (1) mit einem ersten Reibrad (2) und die zweite Komponente des Planeten- oder Ausgleichsgetriebe (1) mit einem zum ersten Reibrad (2) drehachsgleichen zweiten Reibrad (3) verbunden ist, wobei das zweite Reibrad (3) mit der Ausgangswelle (9) antriebsverbunden ist und wobei die Einganswelle (12) mit einer dritten Komponente des Planeten- oder Ausgleichsgetriebe (1) antriebsverbunden ist, mit einer um eine Reibscheibenachse (5a) drehbaren Reibscheibe (5), wobei die Reibscheibenachse (5a) normal zu den Drehachsen (2a, 3a) der Reibräder (2, 3) angeordnet ist und mit dieser eine Ebene (ε) aufspannen, wobei die Reibscheibe (5) parallel zur Drehachse (2a, 3a) der Reibräder (2, 3) in der Ebene (ε) verschiebbar ist, und wobei die Reibräder (2, 3) denselben Durchmesser (D) aufweisen und auf der Reibscheibe (5) abrollen können,
**dadurch gekennzeichnet, dass** die Reibscheibe (5) im Bereich der Reibscheibenachse (5a) eine konzentrisch zur Reibscheibenachse (5a) angeordnete Ausnehmung oder Vertiefung (10) aufweist.

2. Reibradgetriebe nach Anspruch 1, **dadurch gekennzeichnet, dass** der Durchmesser (B) der kreisförmigen Ausnehmung oder Vertiefung (10) mindestens der Wälzbreite (b) zumindest eines Reibrades (2, 3) entspricht, welches in zumindest einer Betriebsstellung des Reibradgetriebes von der Reibscheibenachse (5a) geschnitten wird.

3. Reibradgetriebe nach Anspruch 1 oder 2, **dadurch gekennzeichnet, dass** zumindest ein Reibrad (2, 3) - in einem Meridianschnitt betrachtet - einen konvex gekrümmten Abrollbereich (14) mit einem definierten Krümmungsradius (r) aufweist.

4. Reibradgetriebe nach Anspruch 3, **dadurch gekennzeichnet, dass** die Ausnehmung oder Vertiefung (10) eine gekrümmte konkave Oberfläche aufweist, wobei vorzugsweise der Krümmungsradius (R) der Oberfläche im Wesentlichen dem Krümmungsradius (r) des Reibrades (2, 3) im Abrollbereich (14) entspricht.

5. Reibradgetriebe nach einem der Ansprüche 1 bis 4, **dadurch gekennzeichnet, dass** die Ausnehmung oder Vertiefung (10) eine definierte maximale Tiefe (t) aufweist, welche mindestens der Eindrücktiefe des Reibrades (2, 3) entspricht.

6. Reibradgetriebe nach einem der Ansprüche 1 bis 5, **dadurch gekennzeichnet, dass** die Reibscheibe (5) eine im Wesentlichen ebene, geschlossene Abrollfläche (5b) aufweist.

7. Reibradgetriebe nach einem der Ansprüche 1 bis 6, **dadurch gekennzeichnet, dass** die Reibscheibe (5) auf einem parallel zur Drehachse (2a, 3a) der Reibräder (2, 3) verschiebbar gelagerten Scheibenträger (13) drehbar gelagert ist.

8. Reibradgetriebe nach einem der Ansprüche 1 bis 7, **dadurch gekennzeichnet, dass** mindestens zwei, vorzugsweise mindestens drei um jeweils eine Reibscheibenachse (5a) drehbare Reibscheiben (5) vorgesehen sind, deren normal zur Drehachse (2a, 3a) der Reibräder (2, 3) angeordnete Reibscheibenachsen (5a) einen gemeinsamen Schnittpunkt (S) auf der Drehachse (2a, 3a) der Reibräder (2, 3) aufweisen.
